# EUROPEAN PATENT APPLICATION

(11) **EP 4 610 232 A1**
(43) Date of publication of application: **03.09.2025**
(21) Application number: 25157126.1
(22) Date of filing: 11.02.2025
(51) Int. Cl.: C01G 53/05, C01G 53/42

(54) **POSITIVE ELECTRODE ACTIVE MATERIAL AND POSITIVE ELECTRODE AND LITHIUM SECONDARY BATTERY CONTAINING THE SAME**

(30) Priority: 26.02.2024 KR 20240027444; 04.10.2024 KR 20240134603
(71) Applicant: SAMSUNG SDI CO., LTD., Yongin-si, Gyeonggi-do 17084 (KR)
(72) Inventor: PARK, Jingyu, 17084 Yongin-si (KR); CHANG, Donggyu, 17084 Yongin-si (KR); JANG, Jungsue, 17084 Yongin-si (KR); CHOO, Sung Ho, 17084 Yongin-si (KR); KANG, Taegeun, 17084 Yongin-si (KR); AN, Jisang, 17084 Yongin-si (KR); LEE, Jiho, 17084 Yongin-si (KR); KIM, JinYoung, 17084 Yongin-si (KR); SHIM, Jaeha, 17084 Yongin-si (KR)
(74) Representative: Marks & Clerk LLP

(57) **Abstract**

A positive electrode active material, and both a positive electrode and a lithium secondary battery containing the same, are provided. The positive electrode active material includes a lithium nickel-based composite oxide including nickel (Ni), cobalt (Co) and aluminium (Al), and includes a first region, and a second region surrounding the first region, the second region being defined as a region having a thickness of about 1 micrometre (µm) in a direction from the outermost surface to the centre of the positive electrode active material. The content ratio of nickel to aluminium (N_{Ni}/N_{Al}) of the second region is about 5 to about 45.

## Description

### BACKGROUND

### 1. Field

The invention relates to a positive electrode active material, and both a positive electrode and a lithium secondary battery containing the positive electrode active material.

### 2. Background

Recently, the rapid spread and popularization of battery-powered and/or battery-using electronic devices, such as mobile phones, laptop computers, and/or the like, and/or electric vehicles, have driven the desire or demand for secondary batteries equipped or provided with relatively high energy density and high capacity. Accordingly, research and development to improve the performance of lithium secondary batteries, e.g., as a driving power source for hybrid and/or electric vehicles, and/or as a power source, e.g., energy storage systems (ESSs), is being actively conducted.

A lithium secondary battery is a battery including a positive electrode and a negative electrode, each including an active material capable of (that is configured for) intercalation and deintercalation of lithium ions, and an electrolyte. The lithium secondary battery produces electrical energy through oxidation and reduction reactions if (e.g., when) lithium ions are intercalated into, and deintercalated from, the positive and negative electrodes during a charging and discharge process.

### SUMMARY

One or more aspects of the invention are directed towards a positive electrode active material having a high capacity, excellent or suitable (e.g., high) capacity retention and low resistance change even after repeated charge and discharge, and both a positive electrode and a lithium secondary battery including the positive electrode active material. Additional aspects will be set forth in part in the description which follows and, in part, will be apparent from the description, or may be learned by practice of the presented embodiments of the disclosure.

Accordingly, a first aspect the present invention provides a positive electrode active material including a lithium nickel-based composite oxide including nickel (Ni), cobalt (Co) and aluminium (Al), and including a first region, and a second region that is around (e.g., surrounding) the first region and defined as a region having a thickness of about 1 micrometre (µm) in a direction from an outermost surface of the positive electrode active material to a centre of the positive electrode active material, and wherein a content (e.g., amount) ratio of nickel to aluminium (N_{Ni}/N_{Al}) of the second region is about 5 to about 45.

In a second aspect, the present invention provides a positive electrode including a positive electrode current collector and a positive electrode active material layer, wherein the positive electrode active material layer includes the aforementioned positive electrode active material of the first aspect of the invention.

In a third aspect, the present invention provides a lithium secondary battery including the aforementioned positive electrode active material of the first aspect of the invention and/or the aforementioned positive electrode of the second aspect of the invention.

At least some of the above and other features of the invention are set out in the claims.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIG. 1 schematically illustrates a lithium secondary battery according to one or more embodiments of the present disclosure.
FIGS. 2-5 schematically illustrate different lithium secondary batteries according to one or more embodiments of the present disclosure.
FIG. 6 is a cross-sectional view of a positive electrode according to one or more embodiments of the present disclosure.
FIGS. 7 and 9 each illustrate positive electrode active materials according to one or more embodiments of the present disclosure.
FIG. 8 is an enlarged view of area M in FIG. 7.
FIG. 10 is a flowchart illustrating a method for preparing a positive electrode active material according to one or more embodiments of the present disclosure.
FIG. 11 is a flowchart illustrating step (e.g., act or task) S100 of a method for preparing a positive electrode active material according to one or more embodiments of the present disclosure.
FIG. 12 is a schematic diagram illustrating steps (e.g., acts or tasks) S300 and S500 of a method for preparing a positive electrode active material according to one or more embodiments of the present disclosure.
FIG. 13 is a schematic diagram illustrating step (e.g., act or task) S700 of a method for preparing a positive electrode active material according to one or more embodiments of the present disclosure.
FIG. 14 and FIG. 15 are schematic diagrams illustrating steps (e.g., acts or tasks) S920 and S940 respectively of a method for preparing a positive electrode active material according to one or more embodiments of the present disclosure.
FIG. 16 shows mapping results for a cross-section of a positive electrode active material according to Example 1 using a transmission electron microscope (TEM) image and energy dispersive spectroscopy (EDS).
FIGS. 17A-17C are depth profiling results for a cross-section of a positive electrode active material according to Example 1 using a transmission electron microscope (TEM) and energy dispersive spectroscopy (EDS).

### DETAILED DESCRIPTION

In order to sufficiently understand the configuration and effect of the present disclosure, one or more embodiments of the present disclosure will be described with reference to the accompanying drawings. It should be noted, however, that the present disclosure is not limited to one or more embodiments, and may be implemented in one or more suitable forms. Rather, one or more embodiments are provided only to describe clearly the present disclosure completely and in more detail to such an extent that those skilled in the art may fully know the scope of, and easily implement, the present disclosure.

In the description, if (e.g., when) an element is referred to as being "on" another element, the element can be formed directly on the other element or intervening elements may be present between therebetween. In contrast, if (e.g., when) an element is referred to as being "directly on" another element, there are no intervening elements present. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form (e.g., "a", "an", and/or "the") may include the expression of plural form including "at least one", unless the context clearly dictates otherwise. In addition, unless otherwise specially noted, the phrase "A or B" may indicate "A but not B", "B but not A", and "A and B". The terms "comprises/includes", "comprising/including", "comprise", "include", "having", "has", and/or "have", as used in this description, are intended to designate the presence of an embodied aspect, number, step (e.g., act or task), element, and/or a (e.g., any suitable) combination thereof, and do not exclude the presence or addition of one or more other features, numbers, steps (e.g., acts or tasks), elements, components, and/or a (e.g., any suitable) combination thereof. Additionally, the terms "comprise(s)/comprising", "include(s)/including", "have/has/having", or other similar terms include or support the terms "consisting of" and "consisting essentially of", indicating the presence of stated features, integers, steps, operations, elements, and/or components, without or essentially without the presence of other features, integers, steps, operations, elements, components, and/or groups thereof.

As used herein, the term "combination thereof" may refer to a mixture, a stack, a composite, a copolymer, an alloy, a blend, or a reaction product.

In one or more embodiments, the term "layer" herein includes not only a shape formed on the whole surface if (e.g., when) viewed from a plan view, but also a shape formed on a partial surface.

It will be understood that, although the terms "first", "second", "third", and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer, or section. Thus, a first element, component, region, layer, or section described herein may be termed a second element, component, region, layer or section without departing from the teachings set forth herein.

As utilized herein, the term "and/or" includes any, and all, combinations of one or more of the associated listed items. Expressions such as "at least one of", "one of", and "selected from", if (e.g., when) preceding a list of elements, modify the entire list of elements and do not modify the individual elements of the list. For example, the expressions "at least one of a to c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath", "below", "lower", "above", "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only, and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to various views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure", some of which include the described element and some of which exclude that element and/or include an alternate element. Similarly, alternative language such as "or" refers to "one or more embodiments of the present disclosure", each including a corresponding listed item.

In this context, "consisting essentially of" indicates that any additional components will not materially affect the chemical, physical, optical or electrical properties of the embodiment.

Further, in this specification, the phrase "on a plane", or "plan view", indicates viewing a target portion from the top, and the phrase "on a cross-section" indicates viewing a cross-section formed by vertically cutting a target portion from the side.

The terms "particle diameter", "particle size", and/or the like as utilized herein refer to an average diameter of particles if (e.g., when) the particles are spherical, and refer to an average major axis length of particles if (e.g., when) the particles are non-spherical. For example, a particle diameter may be an average particle diameter. Also, a particle diameter refers to an average particle diameter (D₅₀), which refers to the diameter of particles at a cumulative volume of about 50 vol% in particle size distribution. The average particle diameter (D₅₀) may be measured by a method widely suitable to those skilled in the art, for example, by a particle size analyzer, or by using a transmission electron microscope (TEM) image or a scanning electron microscope (SEM) image. In one or more embodiments, the average particle diameter may be measured by a measurement device using dynamic light-scattering (DLS), wherein data analysis is conducted to count the number of particles for each particle size range, and an average particle diameter (D₅₀) value may then be obtained through calculation. Also, a laser scattering method may be utilized to measure the average particle diameter. In the laser scattering method, target particles are dispersed in a dispersion medium, introduced into a commercial laser diffraction particle diameter measurement instrument (e.g., MT3000 of Microtrac Retsch GmbH), irradiated with ultrasonic waves of about 28 kHz at an output of about 60 W, and the average particle diameter (D₅₀) based on about 50% of particle diameter distribution calculated in the measurement instrument.

In the description, a single particle refers to a particle that exists alone without a grain boundary within the particle and is composed of a single particle, and may refer to a single particle, a monolithic structure, a single-body structure, or a non-agglomerated particle, in which the particles exist as an independent phase without being mutually agglomerated in terms of morphology, and may be, for example, a single crystal. In one or more embodiments, the single particle may be a particle containing several crystals. The single particle may be in a form that is separate and alone, or may exist in a form in which fewer than 10 single particles are attached to each other.

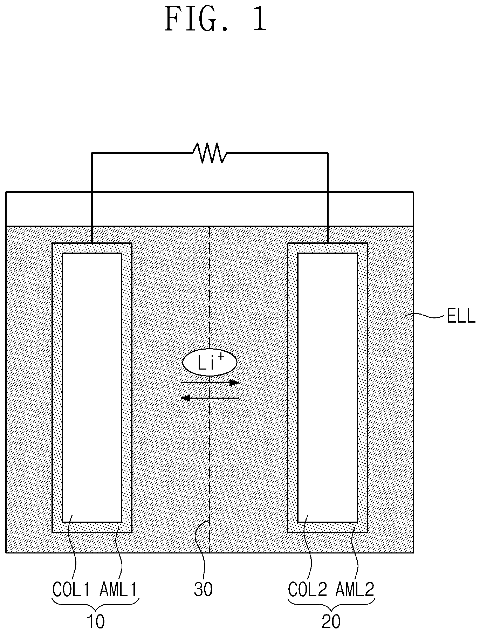

FIG. 1 is a simplified conceptual diagram of a lithium secondary battery according to one or more embodiments of disclosure. Referring to FIG. 1, the lithium secondary battery may include a positive electrode 10, a negative electrode 20, a separator 30, and an electrolyte solution ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a lithium secondary battery includes a current collector COL1 and a positive electrode active material layer AML1 on the current collector COL1. The positive electrode active material layer AML1 includes a positive electrode active material and may further include a binder and/or a conductive material (e.g., electron conductor).

For example, the positive electrode 10 may further include an additive that can serve as a sacrificial positive electrode.

An amount of the positive electrode active material may be about 90 wt% to about 99.5 wt% based on 100 wt% of the positive electrode active material layer AML1. Amounts of the binder and the conductive material may be about 0.5 wt% to about 5 wt%, respectively, based on 100 wt% of the positive electrode active material layer AML1.

The binder may serve to attach the positive electrode active material particles well to each other and also to attach the positive electrode active material well to the current collector COL1. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be used to impart conductivity (e.g., electrical conductivity) to the electrode. Any material that does not cause chemical change (e.g., does not cause an undesirable chemical change in the lithium secondary battery) and conducts electrons may be used in the battery. Examples of the conductive material include a carbon-based material such as natural graphite, artificial graphite, carbon black, acetylene black, Ketjen black, a carbon fiber, a carbon nanofiber, and carbon nanotube; a metal-based material containing copper, nickel, aluminium, silver, and/or the like, in a form of a metal powder or a metal fiber; a conductive polymer such as a polyphenylene derivative; and/or a (e.g., any suitable) mixture thereof.

Al may be used as the current collector COL1, but the present disclosure is not limited thereto.

### Positive Electrode Active Material

The positive electrode active material may include (in addition to the positive electrode active material of the invention) a compound (lithiated intercalation compound) that is capable of intercalating and deintercalating lithium. For example, at least one of a composite oxide of lithium and a metal selected from among cobalt, manganese, nickel, and/or one or more (e.g., any suitable) combinations thereof may be used as the positive electrode active material.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, and/or a (e.g., any suitable) combination thereof.

As an example, the following compounds represented by any one of the following Chemical Formulae may be used as the positive electrode active material. LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1A-g}G_{g}PO₄ (0.90≤a≤1.8 and 0≤g≤0.5); Li_{(3-f)}Fe₂(PO₄)₃(0≤f≤2); or LiₐFePO₄ (0.90≤a≤1.8).

In the preceding Chemical Formulas, A may be Ni, Co, Mn, and/or a (e.g., any suitable) combination thereof; X may be Al, Ni, Co, Mn, Cr, Fe, Mg, Sr, V, a rare earth element and/or a (e.g., any suitable) combination thereof; D may be O, F, S, P, and/or a (e.g., any suitable) combination thereof; G may be Al, Cr, Mn, Fe, Mg, La, Ce, Sr, V, and/or a (e.g., any suitable) combination thereof; and L¹ may be Mn, Al, and/or a (e.g., any suitable) combination thereof.

The positive electrode active material may be, for example, a high nickel-based positive electrode active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of achieving high capacity and can be applied to a high-capacity, high-density lithium secondary battery.

### Negative Electrode 20

The negative electrode 20 for a lithium secondary battery may include a current collector COL2, and a negative electrode active material layer AML2 on the current collector COL2. The negative electrode active material layer AML2 may include a negative electrode active material and may further include a binder and/or a conductive material (e.g., electron conductor).

For example, the negative electrode active material layer AML2 may include about 90 wt% to about 99.5 wt% of the negative electrode active material, about 0.5 wt% to about 5 wt% of the binder, and about 0 wt% to about 5 wt% of the conductive material, based on a total weight (100 wt%) of the negative electrode active material layer AML2.

The binder may serve to attach the negative electrode active material particles well to each other and also to attach the negative electrode active material well to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity to the electrode. Any material that does not cause chemical change and conducts electrons may be used in the battery. Examples of the conductive material include: a carbon-based material such as natural graphite, artificial graphite, carbon black, acetylene black, Ketjen black, a carbon fiber, a carbon nanofiber, and carbon nanotube; a metal-based material including copper, nickel, aluminium, silver, and/or the like, in a form of a metal powder or a metal fiber; a conductive polymer such as a polyphenylene derivative; and/or a (e.g., any suitable) mixture thereof.

The current collector COL2 may use a copper foil, a nickel foil, a stainless steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that can reversibly intercalate and deintercalate lithium ions, a lithium metal, a lithium metal alloy, a material capable of doping/de-doping lithium, and/or a transition metal oxide.

The material that can reversibly intercalate and deintercalate lithium ions may include a carbon-based negative electrode active material, for example, crystalline carbon, amorphous carbon and/or a (e.g., any suitable) combination thereof. The crystalline carbon may be graphite such as non-shaped, sheet-shaped, flake-shaped, sphere-shaped, or fiber-shaped natural graphite and/or artificial graphite. The amorphous carbon may be a soft carbon, a hard carbon, a mesophase pitch carbonization product, calcined coke, and/or the like.

The lithium metal alloy may include an alloy of lithium and at least one metal selected from among Na, K, Rb, Cs, Fr, Be, Mg, Ca, Sr, Si, Sb, Pb, In, Zn, Ba, Ra, Ge, Al, and Sn.

The material capable of doping/de-doping lithium may be a Si-based negative electrode active material or a Sn-based negative electrode active material. The Si-based negative electrode active material may include silicon, a silicon-carbon composite, SiOx (0<x≤2), a Si-Q alloy (where Q is selected from among an alkali metal, an alkaline earth metal, a Group 13 element, a Group 14 element (except for Si), a Group 15 element, a Group 16 element, a transition metal, a rare-earth element, and/or a (e.g., any suitable)combination thereof), and/or a (e.g., any suitable) combination thereof. The Sn-based negative electrode active material may include Sn, SnOₓ (where 0<x≤2), SnO₂, a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

### Separator 30

Depending on the type (kind) of the lithium secondary battery, a separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on one or both surfaces (e.g., opposite surfaces) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

### Electrolyte Solution ELL

The electrolyte solution ELL for a lithium secondary battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, or an ether bond); amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In some embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent provides lithium ions in a battery, enables a basic operation of a lithium secondary battery, and improves transportation of the lithium ions between positive and negative electrodes. Examples of the lithium salt include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate(LiDFOB), lithium difluorobis(oxalato)phosphate (LiDFBOP), and lithium bis(oxalato) borate (LiBOB).

### Lithium Secondary Battery

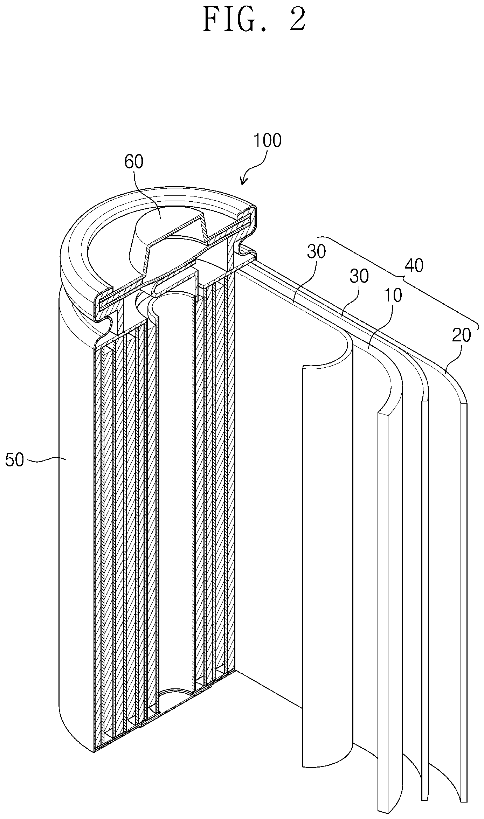

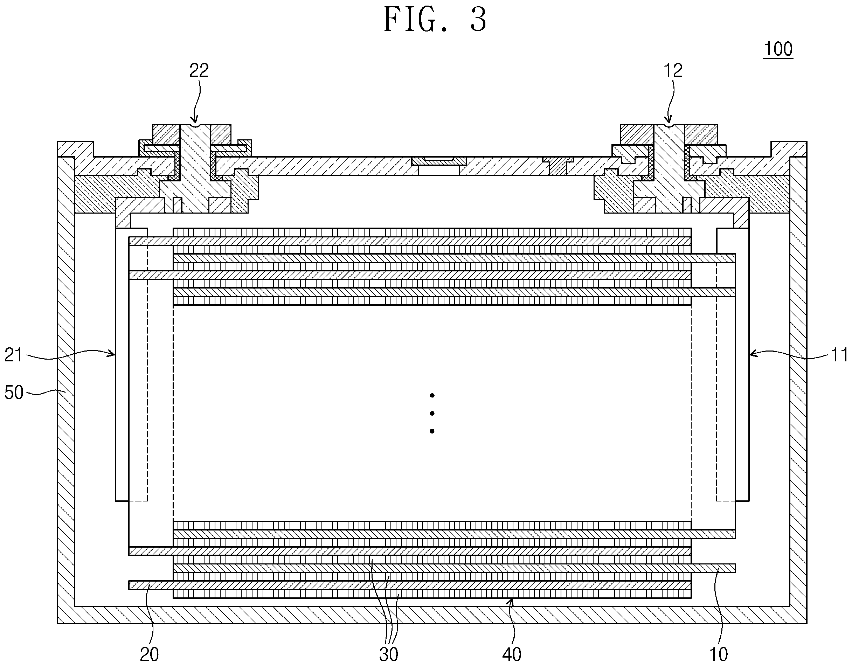

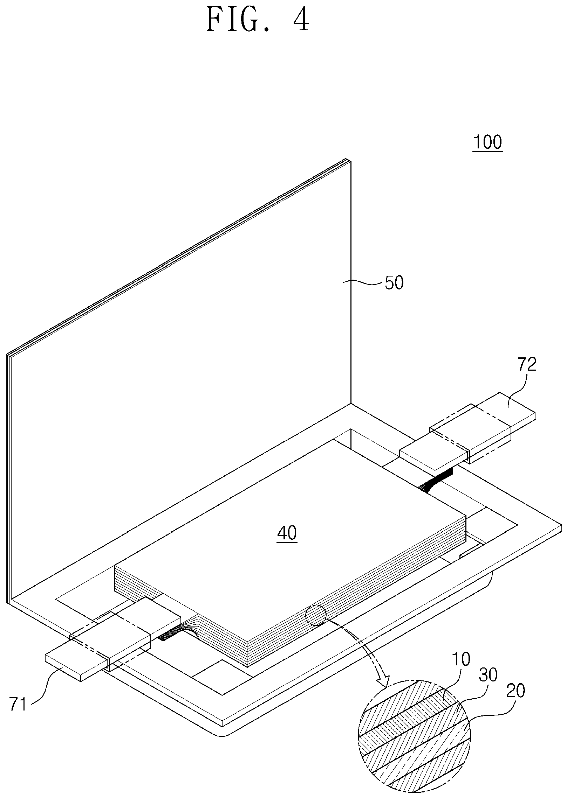

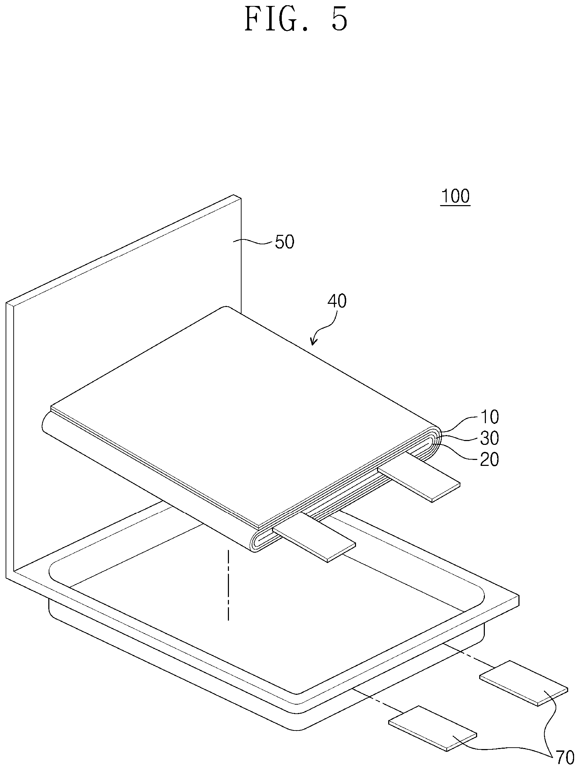

The lithium secondary battery may be classified into cylindrical, prismatic, pouch, or coin-type (kind) batteries, and/or the like depending on their shape. FIGS. 2 to 5 are schematic views illustrating lithium secondary batteries according to one or more embodiments. FIG. 2 shows a cylindrical battery, FIG. 3 shows a prismatic battery, and FIGS. 4 and 5 show pouch-type (kind) batteries. Referring to FIGS. 2 to 5, the lithium secondary battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The lithium secondary battery 100 may include a sealing member 60 sealing the case 50, as shown in FIG. 2. In FIG. 3, the lithium secondary battery 100 may include a positive lead tab 11, a positive terminal 12, a negative lead tab 21, and a negative terminal 22. As shown in FIGS. 4 and 5, the lithium secondary battery 100 may include electrode tabs 70, which may be, for example, a positive electrode tab 71 and a negative electrode tab 72 serving as an electrical path for inducing the current formed in the electrode assembly 40 to the outside.

A lithium secondary battery according to one or more embodiments may be applied to automobiles, mobile phones, and/or one or more suitable types (kinds) of electric devices, as non-limiting examples.

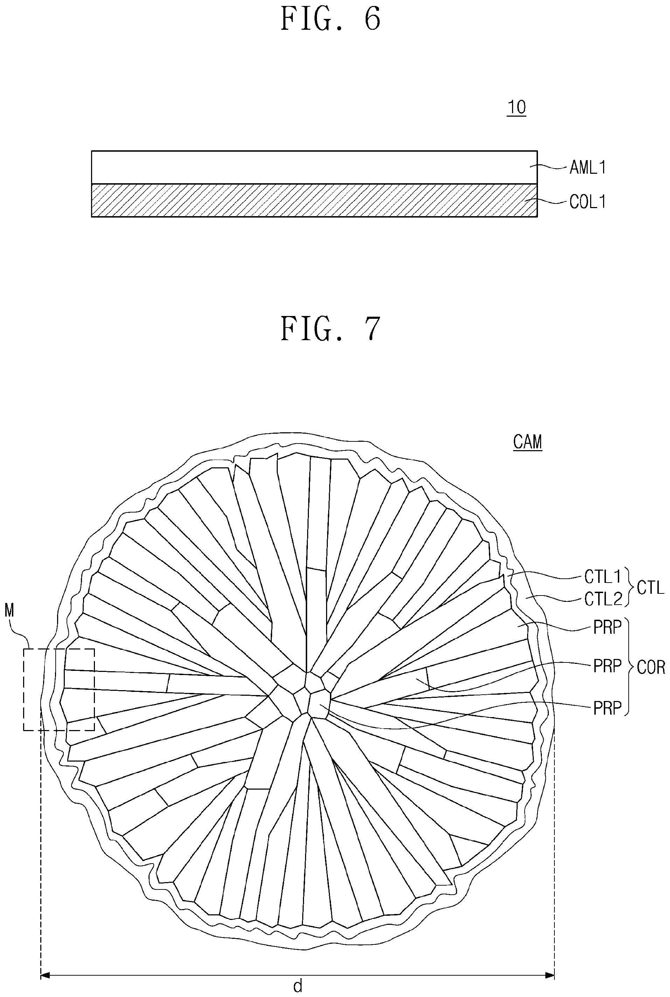

FIG. 6 is a cross-sectional view of a positive electrode according to one or more embodiments of the present invention disclosure. Hereinafter, for convenience of explanation, descriptions of the same configurations as those described with reference to FIGS. 1 to 5 will not be repeated; only differences will be described in more detail.

A positive electrode 10 may include a current collector COL1 and a positive electrode active material layer AML1 formed on the current collector COL1. The positive electrode active material layer AML1 may include a positive electrode active material CAM to be described later, and may further include a binder and/or a conductive material.

The descriptions of the content (e.g., amount) of the positive electrode active material CAM, the binder, the conductive material, and the current collector COL1 are as described above. The descriptions of the positive electrode active material CAM are as described herein.

### Positive Electrode Active Material CAM

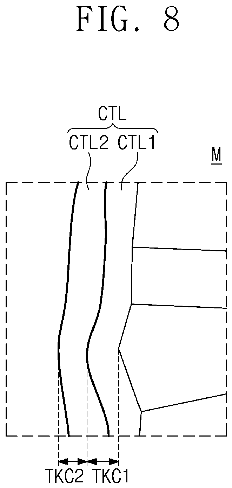

FIGS. 7 to 9 are cross-sectional views for explaining (e.g., illustrating) a positive electrode active material according to one or more embodiments of disclosure. FIG. 8 is an enlarged view of area M in FIG. 7.

Referring to FIG. 7, the positive electrode active material CAM may be in a polycrystalline form and may include secondary particles in which at least two or more primary particles PRP are agglomerated, e.g., the secondary particle may be an agglomeration of primary particles.

The positive electrode active material CAM may be spherical or elliptical.

The average particle diameter d of the positive electrode active material CAM may be about 5 micrometres (µm) to about 25 µm. For example, the average particle diameter d of the positive electrode active material CAM may be about 7 µm to about 25 µm, about 10 µm to about 25 µm, or about 10 µm to about 20 µm. For example, the average particle diameter d of the positive electrode active material CAM may be obtained by randomly selecting about 30 positive electrode active materials CAM in the form of secondary particles from an electron microscope image of the positive electrode active material CAM, measuring the particle diameter, and taking the diameter of the particles having a cumulative volume of about 50% by volume from particle size distribution as the average particle diameter.

The positive electrode active material CAM may include a core COR and a coating layer CTL.

The core COR may be in the form of a polycrystal and may include secondary particles in which at least two or more primary particles PRP are agglomerated.

The core COR includes a lithium nickel-based composite oxide. The lithium nickel-based composite oxide includes lithium (Li), nickel (Ni), cobalt (Co) and aluminium (Al). The content (e.g., amount) of nickel (Ni) included in the lithium nickel-based composite oxide is not limited.

For example, the lithium nickel-based composite oxide may include a high content (e.g., amount) of nickel (Ni). For example, in the lithium nickel-based composite oxide, the content (e.g., amount) of nickel (Ni) among metals excluding lithium is about 60 mol% or more, about 80 mol% or more, about 90 mol% or more, or about 95 mol% or more, and about 100 mol% or less, about 99.9 mol% or less, or about 99 mol% or less. For example, in the lithium nickel-based composite oxide, the mole number of nickel (Ni) relative to the total mole number of transition metals is about 60 mol% or more, about 80 mol% or more, about 90 mol% or more, or about 95 mol% or more, and about 100 mol% or less, about 99.9 mol% or less, or about 99 mol% or less. If (e.g., when) the content (e.g., amount) of nickel (Ni) satisfies the herein-described range, the positive electrode active material CAM may achieve high capacity and high performance.

In one or more embodiments, the lithium nickel-based composite oxide may be represented by Chemical Formula 1:

**Chemical Formula 1** Liₐ₁Niₓ₁CO_{y1}Al_{z1}O_{2-b1}X_{b1}

In Chemical Formula 1, 0.9≤a1≤1.8, 0.6≤x1≤1, 0<y1≤0.2, 0<z1≤0.2, 0.9≤x1+y1+z1≤1.1, 0≤b1≤0.1, and X may be one or more (e.g., at least one) elements selected from among the group consisting of F, P and S.

For example, in Chemical Formula 1, 0.85≤x1≤1, 0<y1≤0.15, and 0<z1≤0.15 may be satisfied, or 0.9≤x1≤1, 0<y1≤0.1, and 0<z1≤0.1 may be satisfied.

For example, in Chemical Formula 1, 0.85≤x1≤0.99, 0.01≤y1≤0.15, and 0.01≤z1≤0.15 may be satisfied, or 0.9≤x1≤0.99, 0.01≤y1≤0.1, and 0.01≤z1≤0.1 may be satisfied.

For example, x1+y1+z1=1.

For example, the lithium nickel-based composite oxide may be represented by Chemical Formula 2:

**Chemical Formula 2** Liₐ₂Niₓ₂CO_{y2}Al_{z2}M¹_{w2}O_{2-b2}X_{b2}

In Chemical Formula 2, 0.9≤a2≤1.8, 0.6≤x2≤0.98, 0.01≤y2≤0.19, 0.01≤z2≤0.19, 0≤w2≤0.19, 0.9≤x2+y2+z2+w2≤1.1, 0≤b2≤0.1, M¹ may be one or more (e.g., at least one) elements selected from among the group consisting of B, Ba, Ca, Ce, Cr, Fe, Mg, Mn, Mo, Nb, Si, Sr, Ti, V, W and Zr, and X may be one or more (e.g., at least one) elements selected from among the group consisting of F, P and S.

For example, in Chemical Formula 2, 0.85≤x2≤0.98, 0.01≤y2≤0.14, 0.01≤z2≤0.14, and 0≤w2≤0.14 may be satisfied, or 0.9≤x2≤0.98, 0.01≤y2≤0.09, 0.01≤z2≤0.09, and 0≤w2≤0.09 may be satisfied.

For example, x2+y2+z2+w2=1.

The coating layer CTL may be positioned on the core COR. The coating layer CTL may be positioned on the entire surface or at least a portion of the surface of the core COR. The coating layer CTL may include cobalt (Co) and aluminium (Al). For example, the elemental composition of the coating layer CTL may be confirmed through component analysis using energy dispersive spectroscopy (EDS). By including the coating layer CTL, the positive electrode active material CAM may be structurally stable even though charge and discharge are repeated, side reactions on the surface of the core COR may be suppressed or reduced, and life characteristics of the positive electrode active material CAM at the room temperature and high temperature may be improved.

For example, cobalt (Co) in the coating layer CTL may exist in the form of a cobalt-containing compound. For example, the cobalt-containing compound may be cobalt oxide, cobalt hydroxide, cobalt carbonate, a composite thereof, and/or a (e.g., any suitable) mixture thereof. For example, the cobalt-containing compound may further include (e.g., contain) other metal or nonmetal elements in addition to cobalt. For example, the cobalt-containing compound may further include (e.g., contain) lithium, manganese, and/or nickel. For example, the cobalt-containing compound may be lithium cobalt oxide, and/or the like.

For example, aluminium (Al) in the coating layer CTL may be, exist in the form of, an aluminium-containing compound. For example, the aluminium-containing compound may be aluminium oxide, aluminium hydroxide, aluminium carbonate, a composite thereof, and/or a (e.g., any suitable) mixture thereof. For example, the aluminium-containing compound may further include (e.g., contain) other metal or nonmetal elements in addition to aluminium. For example, the aluminium-containing compound may further include (e.g., contain) lithium, manganese, and/or nickel. For example, the aluminium-containing compound may be lithium aluminate, and/or the like.

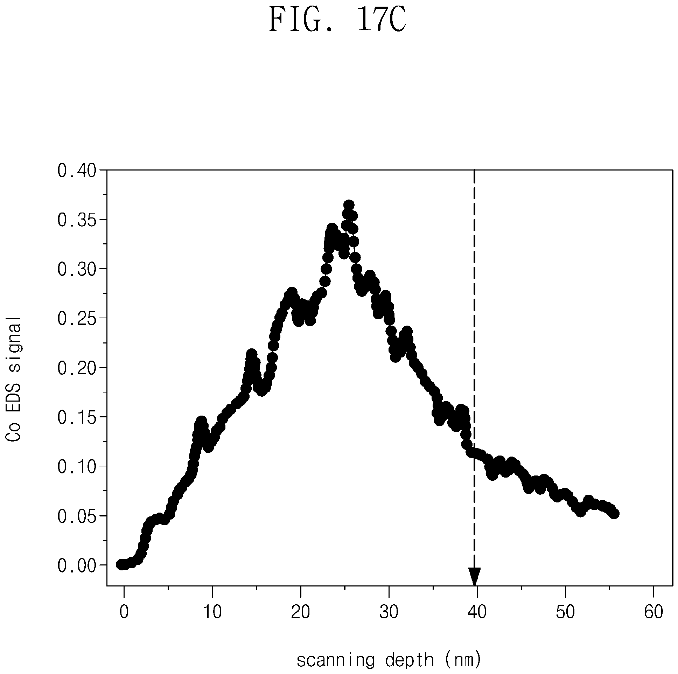

The coating layer CTL and the core COR may be distinguished by performing depth profiling on the positive electrode active material CAM using a transmission electron microscope (TEM) and energy dispersive spectroscopy (EDS). In the description, in the EDS results showing the cobalt signal (Co signal) obtained by scanning the positive electrode active material CAM in the direction from the outermost surface (e.g., edge) of the cross-section of the positive electrode active material CAM toward the centre. For example, a point where a cobalt signal (Co signal) shows the most rapid decrease after the maximum peak may be defined as a boundary between the coating layer CTL and the core COR (see FIG. 17C). For example, the size of the signal may be proportional to the content (e.g., amount) of the elements. For example, the content (e.g., amount) may be atomic%.

The total content (e.g., amount) of cobalt and aluminium in the coating layer CTL may be greater than the total content (e.g., amount) of cobalt and aluminium in the core COR. For example, the total content (e.g., amount) of cobalt and aluminium in the coating layer CTL may be greater than the total content (e.g., amount) of cobalt and aluminium in the lithium nickel-based composite oxide. For example, the total content (e.g., amount) may be atomic%.

The content (e.g., amount) of cobalt in the coating layer CTL may be greater than the content (e.g., amount) of cobalt in the core COR. The content (e.g., amount) of aluminium in the coating layer CTL may be greater than the content (e.g., amount) of aluminium in the core COR. For example, the content (e.g., amount) of cobalt and aluminium in the coating layer CTL may be greater than the content (e.g., amount) of cobalt and aluminium in the lithium nickel composite oxide. For example, the content (e.g., amount) may be atomic%.

The content (e.g., amount) of cobalt in the lithium nickel-based composite oxide may be less than the content (e.g., amount) of cobalt in the coating layer CTL. For example, the content (e.g., amount) may be atomic%. In one or more embodiments, the content (e.g., amount) of aluminium in the lithium nickel-based composite oxide may be less than the content (e.g., amount) of aluminium in the coating layer CTL. For example, the content (e.g., amount) of aluminium may be about 100 parts per million (ppm) or less, based on a total amount of the lithium nickel-based composite oxide.

In one or more embodiments, the content (e.g., amount) of each of cobalt and aluminium in the lithium nickel-based composite oxide may be less than the content (e.g., amount) of each of cobalt and aluminium in the coating layer CTL.

The molar ratio of aluminium to cobalt in the coating layer CTL (C_{Al}/C_{Co}) may be about 0.1 to about 4. For example, the molar ratio of aluminium to cobalt (C_{Al}/C_{Co}) in the coating layer CTL may be about 0.1 to about 3, about 0.1 to about 1, or about 0.1 to about 0.5. If (e.g., when) the content (e.g., amount) of cobalt, the content (e.g., amount) of aluminium, and/or the molar ratio (C_{Al}/C_{Co}) in the coating layer CTL satisfy the herein-described ranges, the positive electrode active material CAM may have long lifespan and reduce the amount of change in resistance even after repeated charge and discharge.

Referring to FIG. 8, the coating layer CTL may include a first coating layer CTL1 and a second coating layer CTL2.

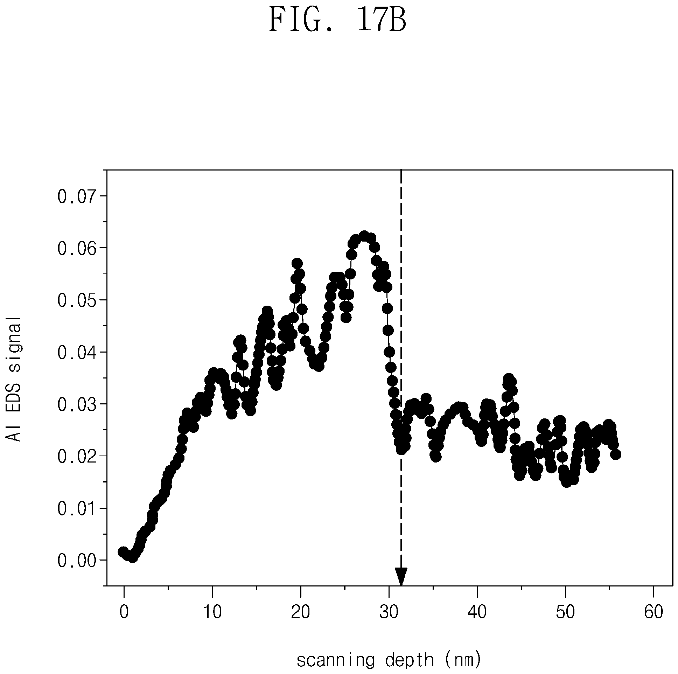

The first coating layer CTL1 and the second coating layer CTL2 may be distinguished by performing depth profiling on the positive electrode active material CAM using a transmission electron microscope (TEM) and energy dispersive spectroscopy (EDS). In the EDS results showing the signal of aluminium (Al signal) obtained by scanning the positive electrode active material CAM in the direction from the outermost surface (e.g., edge) of the cross-section of the positive electrode active material CAM toward the centre, a point where the signal of aluminium (Al signal) shows the most rapid decrease after the maximum peak may be defined as the boundary of the first coating layer CTL1 and the second coating layer CTL2 (see FIG. 17B). For example, the strength (e.g., amplitude or size) of the signal may be proportional to the content (e.g., amount). For example, the content (e.g., amount) may be atomic%.

The content (e.g., amount) of aluminium in the second coating layer CTL2 may be greater than the content (e.g., amount) of aluminium in the first coating layer CTL1. The content (e.g., amount) of aluminium in the first coating layer CTL1 may be substantially the same as the content (e.g., amount) of aluminium in the core COR. The substantially same content (e.g., amount) may be defined as a difference of less than about 10% between the average value of the aluminium signal (Al signal) of the first coating layer CTL1 and the average value of the aluminium signal (Al signal) of the core COR in the EDS results showing the aluminium signal (Al signal) obtained by scanning the positive electrode active material CAM in the direction from the outermost surface to the centre of the positive electrode active material CAM. For example, the content (e.g., amount) may be atomic%.

The first coating layer CTL1 may have a first thickness TKC1. The second coating layer CTL2 may have a second thickness TKC2. The sum of the first thickness and the second thickness (TKC1+TKC2) may be about 25 nanometres (nm) to about 60 nm. For example, the sum of the first thickness and the second thickness (TKC1+TKC2) may be about 29 nm to about 55 nm, or about 40 nm to about 50 nm. If (e.g., when) the sum of the first thickness and/or the second thickness (TKC1+TKC2) satisfies the herein-described range, the positive electrode active material CAM may have long lifespan even though charge and discharge are repeated, and the amount of change in resistance may be reduced.

The ratio of the second thickness to the first thickness (TKC2/TKC1) may be about 1 to about 5. For example, the ratio of the second thickness to the first thickness (TKC2/TKC1) may be about 1.4 to about 3.14, or about 2 to about 3.

The ratio of the second thickness to the sum of the first and second thicknesses (TKC2/(TKC1+TKC2)) may be about 0.83 or less. For example, the ratio of the second thickness to the sum of the first and second thicknesses (TKC2/(TKC1+TKC2)) may be about 0.5 to about 0.83, about 0.6 to about 0.80, or about 0.65 to about 0.8.

The ratio of the sum of the first and second thicknesses to the second thickness ((TKC1+TKC2)/TKC2) may be about 1.2 or more. For example, the ratio of the sum of the first and second thicknesses to the second thickness ((TKC1+TKC2)/TKC2) may be about 1.2 to about 2, about 1.25 to about 1.7, or about 1.25 to about 1.5.

If (e.g., when) the ratio of the second thickness to the first thickness (TKC2/TKC1), the ratio of the second thickness to the sum of the first and second thicknesses (TKC2/(TKC1+TKC2)), and/or the ratio of the sum of the first and second thicknesses to the second thickness ((TKC1+TKC2)/TKC2) satisfy the herein-described ranges, the positive electrode active material CAM may have long lifespan and reduce the amount of change in resistance even though charge and discharge are repeated.

The first thickness TKC1 may be a value obtained by subtracting the second thickness TKC2 from the sum of the first and second thicknesses (TKC1+TKC2). The second thickness TKC2 may be about 20 nm to about 40 nm. For example, the second thickness TKC2 may be about 25 nm to about 40 nm, about 30 nm to about 40 nm, or about 30 nm to about 35 nm. If (e.g., when) the second thickness TKC2 satisfies the herein-described range, the positive electrode active material CAM may have long lifespan and reduce the amount of change in resistance even though charge and discharge are repeated.

In addition to the coating layer CTL, the positive electrode active material CAM may further include a grain boundary coating layer on the surface of each of the primary particles (see PRP in FIG. 7). The grain boundary coating layer may exist inside the positive electrode active material CAM. The grain boundary coating layer may be formed by coating along an interface between the primary particles (see PRP in FIG. 7) inside (e.g., a secondary particle) of the positive electrode active material CAM. For example, the grain boundary coating layer may refer to that it is coated on the grain boundary inside the positive electrode active material CAM. The inside of the positive electrode active material CAM may refer to the entire inside of the positive electrode active material CAM excluding the surface of the positive electrode active material CAM. For example, the inside of the positive electrode active material CAM may refer to a region from about 10 nm deep (e.g., away) from the outermost surface of the positive electrode active material CAM to the entire inside (e.g., centre), or from a depth of about 10 nm to a depth of about 2 µm.

The grain boundary coating layer may include cobalt (Co) and aluminium (Al). Cobalt (Co) and aluminium (Al) may be uniformly (e.g., substantially uniformly) distributed within the grain boundary coating layer. For example, cobalt (Co) and aluminium (Al) may be distributed at different locations within the grain boundary coating layer, or may not be concentrated at one location. For example, as a result of mapping using energy dispersive spectroscopy (EDS), cobalt and aluminium within the grain boundary coating layer may exist at substantially the same location.

If (e.g., when) the positive electrode active material CAM further includes the grain boundary coating layer, the structural stability may be strengthened, a substantially uniform (e.g., and even) coating may be induced (e.g., present) on the surface, and the coating content (e.g., amount) on the surface may be appropriately or suitably controlled or selected, so that initial charge/discharge efficiency and life characteristics may be improved without increasing resistance.

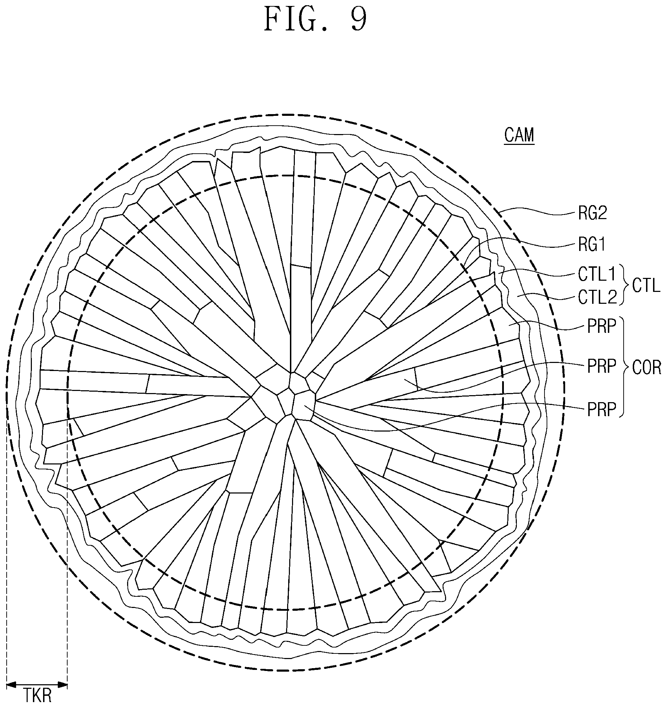

Referring to FIG. 9, the positive electrode active material CAM includes a first region RG1 and a second region RG2.

The first region RG1 is positioned at the centre of the positive electrode active material CAM. The first region RG1 may be defined as a region of the positive electrode active material CAM excluding the second region RG2.

The second region RG2 is positioned at the outer surface (e.g., edge) of the positive electrode active material CAM and is around (e.g., surrounds) the first region RG1. The second region RG2 is defined as a region from the outermost surface (e.g., edge) of the positive electrode active material CAM to a depth at which components may be analyzed using energy dispersive spectroscopy (EDS). The second region RG2 is defined as a region having a thickness TKR of about 1 µm in a direction from the outermost surface of the positive electrode active material CAM toward the centre of the positive electrode active material CAM.

The positive electrode active material CAM including the first region RG1 and the second region RG2 includes nickel (Ni), cobalt (Co), and aluminium (Al). For example, both (e.g., simultaneously) the first region RG1 and the second region RG2 may include nickel (Ni), cobalt (Co), and aluminium (Al). In one or more embodiments, the first region RG1 may include nickel (Ni) and cobalt (Co), and the second region RG2 may include nickel (Ni), cobalt (Co), and aluminium (Al).

The amounts (e.g., contents) of nickel (Ni), cobalt (Co) and aluminium (Al) in the first region RG1 and the second region RG2 may be obtained from energy dispersive spectroscopy (EDS) results, respectively. The amounts (e.g., contents) of nickel (Ni), cobalt (Co) and aluminium (Al) (N_{Ni}, N_{Co} and N_{Al}) derived from energy dispersive spectroscopy (EDS) may be expressed in atomic%. The amounts (e.g., contents) of nickel (Ni), cobalt (Co) and aluminium (Al) (N_{Ni}, N_{Co} and N_{Al}) may be calculated based on the total amounts (e.g., contents) (atomic%) of nickel (Ni), cobalt (Co) and aluminium (Al).

The content (e.g., amount) ratio of nickel to aluminium (N_{Ni}/N_{Al}) of the first region RG1 may be greater than the content (e.g., amount) ratio of nickel to aluminium (N_{Ni}/N_{Al}) of the second region RG2.

For example, the content (e.g., amount) ratio of nickel to aluminium (N_{Ni}/N_{Al}) of the first region RG1 may be about 45 or more. For example, the content (e.g., amount) ratio of nickel to aluminium (N_{Ni}/N_{Al}) of the first region RG1 may be at least about 46 (e.g., or more). For example, about 48 or more, or about 50 or more, and about 100 or less, about 99 or less, about 98 or less, about 95 or less, about 90 or less, about 85 or less, about 80 or less, about 75 or less, about 70 or less, or about 65 or less.

The content (e.g., amount) ratio of nickel to aluminium (N_{Ni}/N_{Al}) of the second region RG2 is about 5 to about 45. For example, the content (e.g., amount) ratio of nickel to aluminium (N_{Ni}/N_{Al}) of the second region RG2 may be about 8 to about 45, about 12 to about 45, or about 15 to about 42.

If (e.g., when) the first region RG1 and/or the second region RG2 each have the content (e.g., amount) ratio of nickel to aluminium (N_{Ni}/N_{Al}) in the herein-described range, the positive electrode active material CAM may have a long lifespan and reduce the change in resistance even after repeated charge and discharge.

The content (e.g., amount) ratio of cobalt to aluminium (N_{Co}/N_{Al}) of the second region RG2 may be about 0.1 or more. For example, the content (e.g., amount) ratio of cobalt to aluminium (N_{Co}/N_{Al}) of the second region RG2 may be about 0.5 or more, about 1 or more, or about 2 or more, and about 10 or less, about 8 or less, or about 6 or less. If (e.g., when) the content (e.g., amount) ratio of cobalt to aluminium (N_{Co}/N_{Al}) of the second region RG2 satisfies the herein-described range, the positive electrode active material CAM may have long lifespan and reduce the change in resistance even after repeated charge and discharge.

The positive electrode 10 and the lithium secondary battery, both including the positive electrode active material CAM according to one or more embodiments of the present disclosure, may have excellent or suitable life characteristics and may have a small change in resistance according to repeated charge and discharge. For example, the positive electrode 10 and the lithium secondary battery, both including the positive electrode active material CAM according to one or more embodiments of the present disclosure, may have a capacity retention of about 95% or more if (e.g., when) the charge and discharge cycle is repeated 50 times under 1 C/1 C conditions (e.g., when operating a lithium secondary battery including positive electrode 10). In some embodiments, the positive electrode 10 and the lithium secondary battery, both including the positive electrode active material CAM according to one or more embodiments of the present disclosure may have a resistance change of at most about 60 ohm (Ω) (e.g., or less), (e.g., about 35 Ω or less), even though the charge and discharge cycle is repeated 50 times under 1 C/1 C conditions (e.g., when operating a lithium secondary battery including positive electrode 10).

### Preparation Method of Positive Electrode Active Material CAM

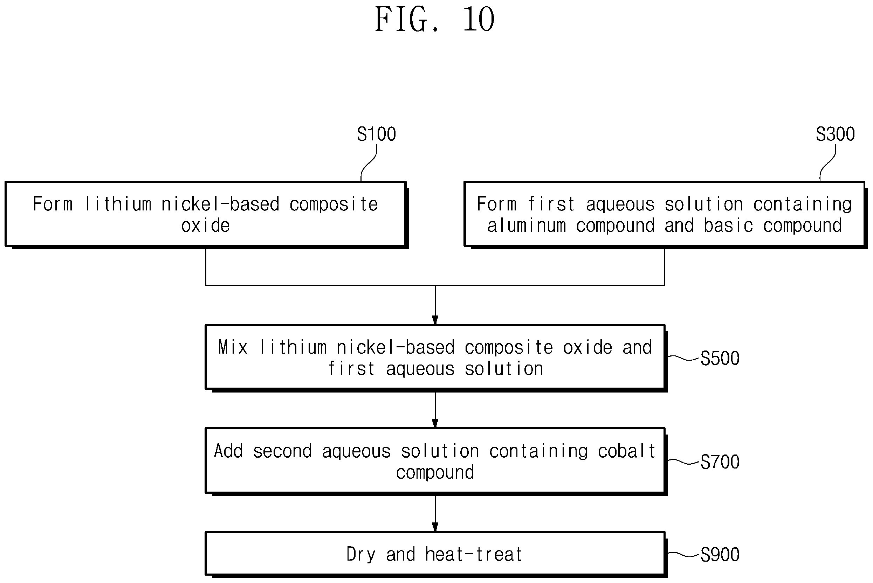

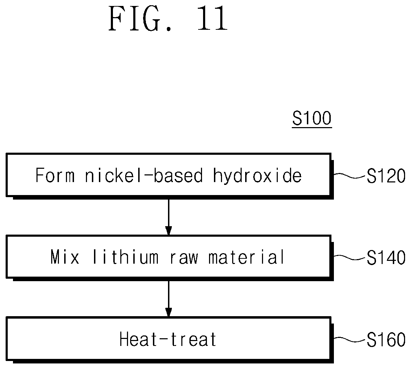

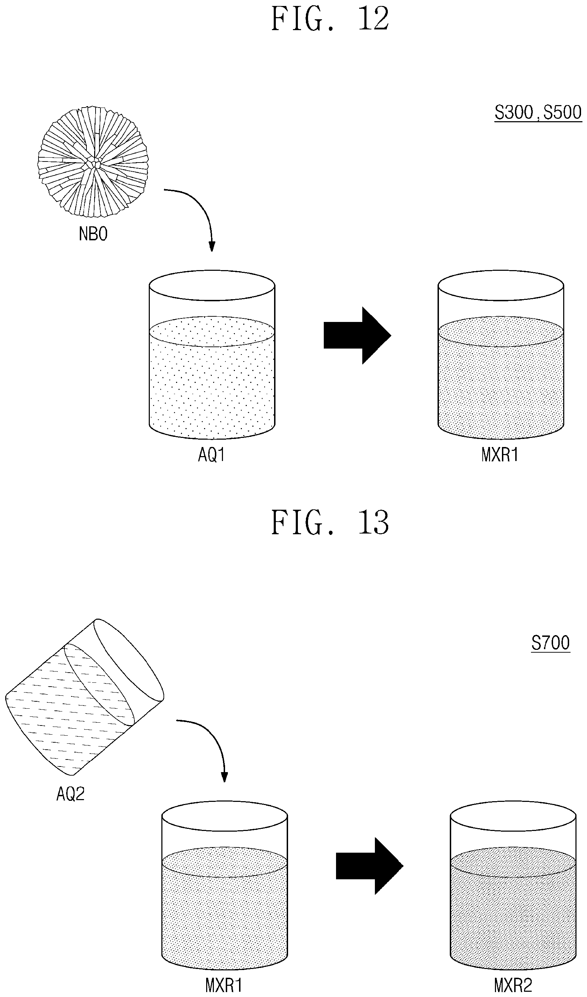

FIG. 10 is a flowchart for explaining a method for preparing a positive electrode active material CAM according to one or more embodiments of the disclosure. FIG. 11 is a flowchart for explaining one or more embodiments of step (e.g., act or task) S100 of the preparation method. FIGS. 12 to 15 are schematic diagrams for explaining each other step (e.g., act or task) of the preparation method.

Referring to FIG. 10, a method for preparing a positive electrode active material CAM according to one or more embodiments of the present disclosure may include forming a lithium nickel-based composite oxide (S100) and coating the lithium nickel-based composite oxide.

The coating of the lithium nickel-based composite oxide may include: forming a first aqueous solution containing an aluminium compound and a basic compound (S300); mixing the lithium nickel-based composite oxide and the first aqueous solution to form a mixture (S500); adding a second aqueous solution containing a cobalt compound to the mixture (S700); and drying and heat-treating (S900).

Referring to FIG. 11, forming a lithium nickel-based composite oxide (S100) may include: forming a nickel-based hydroxide (S120); mixing the nickel-based hydroxide and a lithium raw material to form a mixture (S140); and heat-treating the mixture (S160).

The nickel-based hydroxide includes the metals nickel (Ni), cobalt (Co) and aluminium (Al). In one or more embodiments, the nickel-based hydroxide may further include the metal manganese (Mn).

The nickel-based hydroxide may be obtained through including a coprecipitation method in forming a nickel-based hydroxide (S120). For example, the coprecipitation method may include dissolving a metal raw material in a solvent such as distilled water, and continuously introducing a metal salt solution together with a chelating agent and/or a basic aqueous solution into a reactor to cause precipitation. After collecting the precipitate in the form of a slurry, the slurry solution may be filtered and dried to obtain a nickel-based hydroxide, which is a metal composite oxide.

The metal raw material may include a salt of the metal described herein. The salt of the metal may be a sulfate, a nitrate, an acetate, a halide, a hydroxide, and/or the like, and is not particularly limited as long as it may be dissolved in a solvent. The metal raw material includes a nickel salt, a cobalt salt, and an aluminium salt. In one or more embodiments, the metal raw material may also include a manganese salt. The metal raw material may be mixed by adjusting the molar ratio so that the positive electrode active material has high-capacity characteristics.

The nickel-based hydroxide may be mixed with the lithium raw material at a certain ratio in mixing the nickel-based hydroxide and a lithium raw material (S140). For example, the nickel-based hydroxide and lithium raw material may be mixed at a molar ratio of about 1:1. The lithium raw material is not particularly limited as long as it is a material commonly used in the preparation of positive electrode active materials. For example, the lithium raw material may include lithium salts such as lithium carbonate, lithium nitrate, lithium hydroxide, and/or lithium sulfate.

The mixture of the nickel-based hydroxide and lithium raw material may be heat-treated by putting it into a furnace FRC (S160). The heat treatment temperature may be about 700 °C to about 1,000 °C. For example, the heat treatment temperature may be about 700 °C to about 800 °C. The heat treatment may be performed in an oxidizing atmosphere such as air and/or oxygen. The heat treatment time may be about 10 hours to about 30 hours. For example, the heat treatment time may be about 10 hours to about 20 hours. In one or more embodiments, preliminary calcination may be additionally performed at about 150 °C to about 800 °C, e.g., before the heat treatment.

In one or more embodiments, a grinding process may be additionally performed after the heat treatment. Through the grinding process, a lithium nickel-based composite oxide having a desired or suitable average particle diameter may be obtained.

The obtained lithium nickel-based composite oxide may have substantially the same components and composition as the core COR described with reference to FIG. 7. Substantially the same composition may refer to that the difference in composition is within about 10%. For example, the lithium nickel-based composite oxide may be a compound represented by Chemical Formula 1. For example, the lithium nickel-based composite oxide may be a compound represented by Chemical Formula 2.

Referring to FIGS. 12 to 15, the lithium nickel-based composite oxide NBO may be coated.

Referring to FIG. 12, a first aqueous solution AQ1 including an aluminium compound and a basic compound may be formed (S300).

The aluminium compound may be an aluminium coating raw material. For example, the aluminium compound may include at least one selected from among the group consisting of aluminium sulfate (Al₂(SO₄)₃) and sodium aluminate (NaAlO₂). However, one or more embodiments of disclosure is not limited thereto.

The aluminium compound may be added so that the mole number of aluminium is about 0.05 mol% to about 2 mol% relative to the total mole number of elements excluding lithium and oxygen in the lithium nickel-based composite oxide. For example, the aluminium compound may be added so that the mole number of aluminium is about 0.05 mol% to about 1.5 mol%, about 0.05 mol% to about 1 mol%, about 0.1 mol% to about 1 mol%, about 0.2 mol% to about 0.8 mol%, or about 0.5 mol% to about 0.8 mol% relative to the total mole number of elements excluding lithium and oxygen in the lithium nickel-based composite oxide. If (e.g., when) the amount of the aluminium compound added satisfies the herein-described ranges, a finally prepared positive electrode active material may have long lifespan and may reduce the amount of change in resistance.

In one or more embodiments, the basic compound may include at least one selected from among the group consisting of sodium hydroxide (NaOH), lithium hydroxide (LiOH), potassium hydroxide (KOH) and ammonia (NH₃). However, the basic compound may be one that may be used for precipitation, and is not particularly limited to the examples illustrated.

For example, the first aqueous solution AQ1 may include anionic aluminium. By first generating anionic aluminium, a finally prepared positive electrode active material may have long lifespan and reduce the amount of change in resistance.

The first aqueous solution AQ1 and the lithium nickel-based composite oxide NBO may be mixed to form a mixture MXR1 (S500). The mixing may be performed using a stirrer.

The mixing may be performed for about 3 minutes to about 30 minutes. However, one or more embodiments of the present disclosure is not limited to the described time, and time to form a substantially uniform mixture (MXR1) may be sufficient.

Referring to FIG. 13, the second aqueous solution AQ2 may be added to the mixture MXR1 (S700). The second aqueous solution AQ2 may include a cobalt compound.

The cobalt compound may be a cobalt coating raw material. For example, at least one selected from among the group consisting of cobalt nitrate, cobalt sulfate, cobalt oxide, cobalt hydroxide, and cobalt carbonate may be included. However, one or more embodiments of the present disclosure is not particularly limited thereto.

The cobalt compound may be added so that the mole number of cobalt is about 0.25 mol% to about 4 mol% relative to the total mole number of elements excluding lithium and oxygen in the lithium nickel-based composite oxide. For example, the cobalt compound may be added so that the mole number of cobalt is about 0.5 mol% to about 4 mol%, about 1 mol% to about 4 mol%, about 1 mol% to about 3 mol%, or about 1.2 mol% to about 3 mol% relative to the total mole number of elements excluding lithium and oxygen in the lithium nickel-based composite oxide. If (e.g., when) the amount of the cobalt compound added satisfies the herein-described ranges, a finally prepared positive electrode active material may have long lifespan and reduce the amount of change in resistance.

The molar ratio of the amount of aluminium in the aluminium compound added to cobalt in the cobalt compound added may be about 0.1 to about 4. For example, the molar ratio of the amount of aluminium in the aluminium compound added to cobalt in the cobalt compound added may be about 0.1 to about 3, about 0.1 to about 1, about 0.1 to about 0.7, or about 0.1 to about 0.5. If (e.g., when) the molar ratio of the amount of aluminium in the aluminium compound added to cobalt in the cobalt compound added satisfies the herein-described ranges, a finally prepared positive electrode active material may have long lifespan and may reduce the amount of change in resistance.

For example, the second aqueous solution AQ2 may be dropped into the mixture MXR1. For example, the cobalt coating raw material in the second aqueous solution AQ2 may be slowly supplied (e.g., drop-wise) to the mixture MXR1.

The addition of the second aqueous solution AQ2 may be performed for about 5 minutes to about 1 hour. For example, the addition of the second aqueous solution AQ2 may be performed for about 10 minutes to about 50 minutes, or about 20 minutes to about 40 minutes.

If (e.g., when) necessary, a precipitant, a pH regulator, and/or the like may be further added to the mixture MXR1.

In this step (e.g., act or task), the precipitation of aluminium and cobalt may occur concurrently (e.g., simultaneously). Aluminium and cobalt may exist in the form of an aluminium-containing compound and a cobalt-containing compound, respectively. For example, the aluminium-containing compound may include aluminium hydroxide, and/or the like, and the cobalt-containing compound may include cobalt hydroxide, and/or the like. However, one or more embodiments of the present disclosure is not limited thereto. Aluminium and cobalt may be precipitated on the surface of the lithium nickel-based composite oxide NBO. Accordingly, the mixture MXR2 may include a lithium nickel-based composite oxide NBO on which aluminium and cobalt are precipitated on the surface.

The coating of the lithium nickel-based composite oxide NBO according to one or more embodiments of the present disclosure may be wet coating. By performing wet coating through the herein-described steps, cobalt and aluminium may be concurrently (e.g., simultaneously) and uniformly (e.g., substantially uniformly) coated not only on the surface of the lithium nickel-based composite oxide NBO but also on the grain boundaries, which are the surfaces of primary particles.

The coating of the lithium nickel-based composite oxide NBO according to one or more embodiments of the present disclosure may be performed by first adding an aluminium compound and then adding a cobalt compound. As a result, a coating layer (CTL of FIG. 7) having the structure described herein may be formed, and a positive electrode active material finally prepared may have long lifespan and reduce the amount of change in resistance.

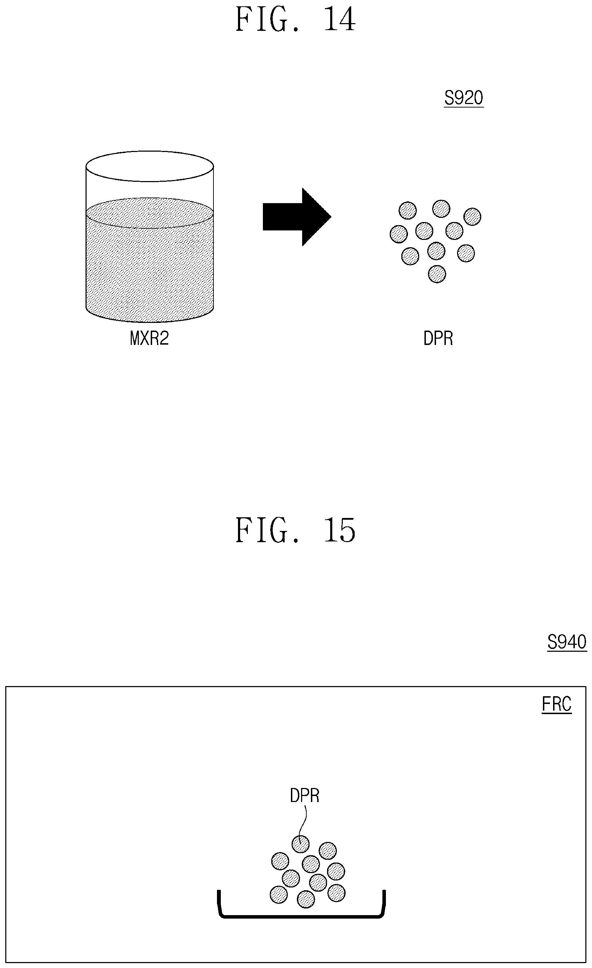

Referring to FIGS. 14 and 15, the mixture MXR2 may be dried and heat-treated to form the herein-described positive electrode active material (CAM of FIG. 7) (S920 and S940).

The mixture MXR2 may be filtered to remove the solvent, and dried to obtain a dried product DPR (S920). The drying temperature may be about 100 °C to about 300 °C. The drying time may be about 5 hours to about 15 hours. Through drying, the residual solvent may be removed.

The dried product DPR may be put into a furnace FRC and heat-treated (S940). The heat-treatment temperature may be about 650 °C to about 1000 °C. For example, the heat-treatment temperature may be about 650 °C to about 900 °C, or about 650 °C to about 800 °C. The heat-treatment time may be about 5 hours to about 30 hours. For example, the heat treatment time may be about 10 hours to about 24 hours, or about 10 hours to about 20 hours. If (e.g., when) the heat treatment conditions satisfy the herein-described ranges, a finally prepared positive electrode active material may have long lifespan and reduce the amount of change in resistance.

In one or more embodiments, a lithium raw material may be additionally added prior to the heat treatment and heat treated. For example, the lithium raw material may include a lithium salt such as lithium carbonate, lithium nitrate, lithium hydroxide, and/or lithium sulfate. For example, the lithium raw material may be added so that the mole number of lithium is about 0.1 mol% to about 10 mol% relative to the total mole number of elements excluding lithium and oxygen in the lithium nickel-based composite oxide. For example, the lithium raw material may be added so that the mole number of lithium is about 0.1 mol% to about 8 mol%, or about 1 mol% to about 6 mol% relative to the total mole number of elements excluding lithium and oxygen in the lithium nickel-based composite oxide. If (e.g., when) the lithium raw material is added in the herein-described ranges, the surface of the lithium nickel-based composite oxide damaged during the coating process may be repaired. Thus, the final prepared positive electrode active material may have long lifespan and reduce the amount of change in resistance.

Terms such as "substantially", "about", and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, ± 20%, ± 10%, ± 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

Hereinafter, the present disclosure will be described in more detail through examples. However, the examples are intended to exemplify the present disclosure, and the scope of the present disclosure is not limited to the examples.

### EXAMPLES

### Example 1

### Preparation Example 1: Formation of Lithium Nickel-based Composite Oxide

As raw materials of a nickel-based hydroxide, nickel sulfate (NiSO₄·6H₂O), cobalt sulfate (CoSO₄·7H₂O), and aluminium sulfate (Al₂(SO₄)₃) were dissolved in distilled water as a solvent at a molar ratio of Ni:Co:Al of about 96.5:2:1.5 to prepare a mixture solution of metal raw materials. For forming a complex compound, a diluted ammonia aqueous solution (NH₄OH) and sodium hydroxide (NaOH) as a precipitant were prepared. The mixture solution of metal raw materials, ammonia aqueous solution, and sodium hydroxide were introduced into a reactor. Sodium hydroxide was introduced to maintain the pH of the mixture in the reactor. The reaction was performed for about 20 hours while stirring the mixture in the reactor. The product was filtered, washed, and dried to obtain a nickel-based hydroxide (Ni_{0.965}Co_{0.020}Al_{0.015}(OH)₂).

The nickel-based hydroxide and anhydrous lithium hydroxide (LiOH) were mixed in a molar ratio of about 1:1.03 so that the molar ratio of lithium to the total metal amount of the nickel-based hydroxide was about 1.03. The mixture was heat-treated at a temperature of about 750 °C for about 15 hours in an oxygen atmosphere to form a lithium nickel-based composite oxide (LiNi_{0.965}Co_{0.020}Al_{0.015}O₂). The lithium nickel-based composite oxide included (was formed of) secondary particles in which primary particles were agglomerated, and the average particle diameter was about 12 micrometres (µm).

### Preparation Example 2: Lithium Nickel-based Composite Oxide Coating

A first aqueous solution containing aluminium sulfate (Al₂(SO₄)₃·16H₂O) and sodium hydroxide (NaOH) was formed. The lithium nickel-based composite oxide was added to the first aqueous solution. In this case, the aluminium sulfate was added such that the mole number (e.g., molar amount) of aluminium was about 0.5 mol% with respect to the total mole number (e.g., molar amount) of elements excluding lithium and oxygen in the lithium nickel-based composite oxide. The mixture of the first aqueous solution and the lithium nickel-based composite oxide was stirred for about 5 minutes. A second aqueous solution containing cobalt sulfate (CoSO₄·7H₂O) was added dropwise to the mixture for about 30 minutes. In this case, the cobalt sulfate was added such that the mole number (e.g., molar amount) of cobalt was about 2 mol% with respect to the total mole number of elements excluding lithium and oxygen in the lithium nickel-based composite oxide. The ratio of the mole number of aluminium in the aluminium sulfate added to the mole number of cobalt in the cobalt sulfate added was about 0.25. The mixture was filtered and dried at a temperature of about 190 °C for about 10 hours to obtain a dry product. About 6 mol% lithium hydroxide (LiOH) was mixed with the dry product. The mixture was heat-treated at a temperature of about 650 °C for about 15 hours to obtain a positive electrode active material.

In summary of **Example 1,** nickel sulfate, cobalt sulfate, and aluminium sulfate were dissolved in distilled water at a molar ratio of Ni:Co:Al of 96.5:2:1.5 to prepare a metal mixture solution. This solution was reacted with ammonia and sodium hydroxide to form nickel-based hydroxide (Ni_{0.965}Co_{0.020}Al_{0.015}(OH)₂). The hydroxide was then mixed with lithium hydroxide in a 1:1.03 molar ratio and heat-treated at 750°C for 15 hours in an oxygen atmosphere to form lithium nickel-based composite oxide (LiNi_{0.965}Co_{0.020}Al_{0.015}O₂). This composite oxide is composed of secondary particles, where (e.g., in each of which) primary particles were agglomerated, with an average diameter of 12 µm.

For coating, an aqueous solution of aluminium sulfate and sodium hydroxide was prepared, and the lithium nickel-based composite oxide was added. Aluminium sulfate was added to achieve 0.5 mol% aluminium, and cobalt sulfate was added dropwise over 30 minutes to achieve 2 mol% cobalt, with a mole ratio of aluminium to cobalt of 0.25. The mixture was filtered, dried at 190°C for 10 hours, and then mixed with 6 mol% lithium hydroxide. This final mixture was heat-treated at 650°C for 15 hours to obtain the positive electrode active material, which included secondary particles formed by the agglomeration of primary particles.

### Example 2

Substantially the same manner as Example 1 was performed, except that cobalt sulfate and aluminium sulfate were added so that the ratio of the mole number of aluminium in the aluminium sulfate added to the mole number of cobalt in the cobalt sulfate added was about 3.

### Example 3

Substantially the same manner as Example 1 was performed, except that cobalt sulfate and aluminium sulfate were added so that the ratio of the mole number of aluminium in the aluminium sulfate added to the mole number of cobalt in the cobalt sulfate added was about 1.

### Example 4

Substantially the same manner as Example 1 was performed, except that cobalt sulfate and aluminium sulfate were added so that the ratio of the mole number of aluminium in the aluminium sulfate added to the mole number of cobalt in the cobalt sulfate added was about 0.5.

### Example 5

Substantially the same manner as Example 1 was performed, except that cobalt sulfate and aluminium sulfate were added so that the ratio of the mole number of aluminium in the aluminium sulfate added to the mole number of cobalt in the cobalt sulfate added was about 0.17.

### Comparative Example 1

A positive electrode active material coated only with cobalt was prepared.

A lithium nickel-based composite oxide of Preparation Example 1 was added to an aqueous solution containing about 6 wt% of cobalt sulfate (CoSO₄·7H₂O) and stirred. Sodium hydroxide (NaOH) was added dropwise to the mixture solution. As a result, the ratio of the mole number of aluminium in the aluminium sulfate added to the mole number of cobalt in the cobalt sulfate added was about 0. Thereafter, filtration, drying, and heat treatment were performed in substantially the same manner as in Example 1.

### Manufacture of Positive Electrode

A positive electrode active material slurry was prepared by mixing about 96 wt% of a positive electrode active material, about 2 wt% of a polyvinylidene fluoride binder, and about 2 wt% of a carbon nanotube conductive material in an N-methylpyrrolidone solvent. The positive electrode active material slurry was applied to an aluminium current collector, dried, and rolled to manufacture a positive electrode.

### Fabrication of Lithium Secondary Battery

The positive electrode and a lithium metal electrode as a counter electrode were used, and a separator having a polyethylene-polypropylene multilayer structure was interposed between them. A solution containing about 1.0 molarity (M) LiPF₆ lithium salt in a mixed solvent of ethylene carbonate and diethyl carbonate in a volume ratio of about 50:50 was used as an electrolyte. A coin half-cell was formed by injecting the electrolyte.

**Table 1**

| Division | Amount of cobalt added (mol%) | Amount of aluminium added (mol%) | Molar ratio of amounts added (Co/Al) | Molar ratio of amounts added (Al/Co) |
|---|---|---|---|---|
| Example 1 | 2 | 0.5 | 4 | 0.25 |
| Example 2 | 0.5 | 1.5 | 0.3 | 3 |
| Example 3 | 1 | 1 | 1 | 1 |
| Example 4 | 1.33 | 0.67 | 2 | 0.5 |
| Example 5 | 1.71 | 0.29 | 6 | 0.17 |
| Comparative Example 1 | 2 | 0 | - | 0 |

### Experimental Example 1: Analysis of Structure and Components of Positive Electrode Active Material 1

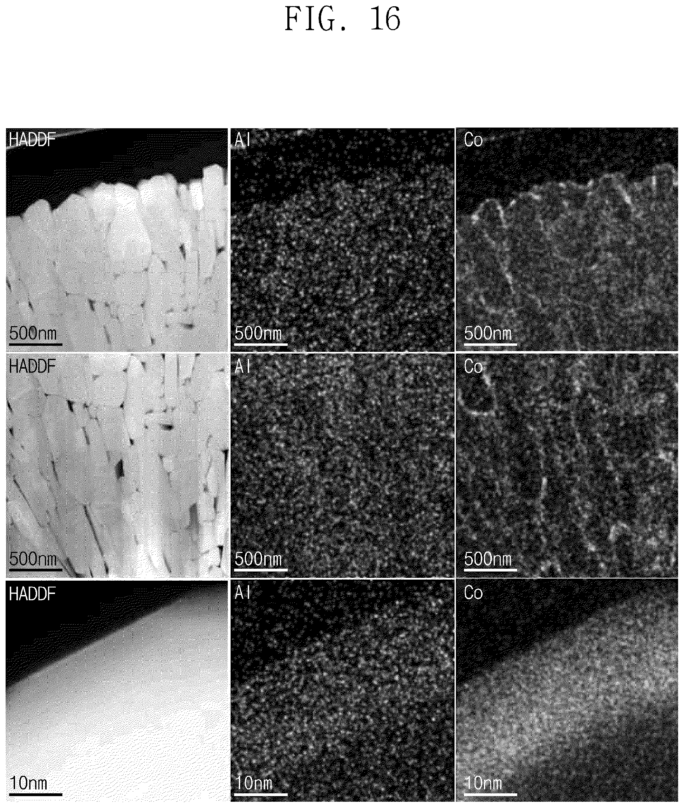

FIG. 16 illustrates mapping results for a cross-section of the positive electrode active material according to Example 1 using transmission electron microscope (TEM) images and energy dispersive spectroscopy (EDS).

Referring to FIG. 16, the positive electrode active material according to Example 1 included a coating layer on a core, and the coating layer included both (e.g., simultaneously) cobalt and aluminium. The positive electrode active material according to Example 1 included a grain boundary coating layer, and the grain boundary coating layer included both (e.g., simultaneously) cobalt and aluminium. As a result of mapping the grain boundary coating layer, cobalt and aluminium were shown to be uniformly (e.g., substantially uniformly) present within the grain boundary coating layer, and cobalt and aluminium within the grain boundary coating layer were present at substantially the same position.

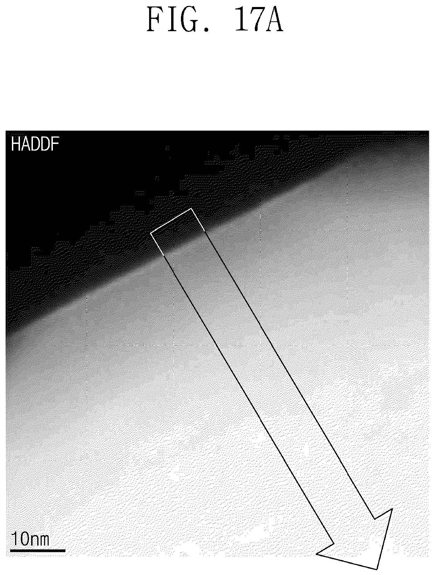

FIGS. 17A to 17C are depth profiling results for the cross-section of a positive electrode active material according to Example 1 using a transmission electron microscope (TEM) and energy dispersive spectroscopy (EDS). FIGS. 17B and 17C are the results of depth profiling along the arrow direction in FIG. 17A from the exterior to the centre.

Referring to FIGS. 17A to 17C, the point where the aluminium signal (Al signal) shows the most rapid decrease after the maximum peak was about 31 nanometres (nm) from the exterior, and the point where the cobalt signal (Co signal) shows the most rapid decrease after the maximum peak was about 40 nm from the exterior. For example, the thickness of the second coating layer (e.g., on the first coating layer) was about 31 nm, and the thickness of the first coating layer (e.g., on the core) was about 9 nm.

### Experimental Example 2: Analysis of Structure and Components of Positive Electrode Active Material 2

The components of the positive electrode active materials according to Examples 1 to 5 and Comparative Example 1 were analyzed using energy dispersive spectroscopy (EDS), and the results are shown in Table 2. The amounts (e.g., contents) (atomic%) of nickel (Ni), cobalt (Co) and aluminium (Al) obtained by energy dispersive spectroscopy (EDS) were expressed as N_{Ni}, N_{Co} and N_{Al}, respectively, and the amount ratios between the contents of nickel (Ni), cobalt (Co), and aluminium (Al) were calculated and expressed as N_{Ni}/N_{Al} and N_{Co}/N_{Al}. The results of Examples 1 to 5 and Comparative Example 1 are the results in the second region RG2 of the positive electrode active materials. The N_{Ni}, N_{Co}, N_{Al}, N_{Ni}/N_{Al} and N_{Co}/N_{Al} values in the first region RG1 of Examples 1 to 5 were substantially the same as the results of the lithium nickel-based composite oxide of Preparation Example 1.

**Table 2**

| Division | N_{Ni} (atomic%) | N_{Co} (atomic %) | N_{Al} (atomic %) | N_{Ni}/N_{Al} | N_{Co}/N_{Al} |
|---|---|---|---|---|---|
| Lithium nickel-based composite oxide of Preparation Example 1 | 93.78 | 4.4 | 1.82 | 51.5 | 2.4 |
| Example 1 | 83.4 | 13.08 | 3.52 | 23.7 | 3.7 |
| Example 2 | 85.2 | 3.3 | 11.5 | 7.4 | 0.29 |
| Example 3 | 84.1 | 7.8 | 8.1 | 10.38 | 0.96 |
| Example 4 | 83.55 | 11.1 | 5.35 | 15.62 | 2.1 |
| Example 5 | 85.94 | 11.93 | 2.13 | 40.34 | 5.6 |
| Comparative Example 1 | 84.2 | 14.21 | 1.59 | 52.96 | 8.94 |

### Experimental Example 3: Performance Evaluation of Lithium Secondary Battery

The charge and discharge efficiency, capacity retention, and DC resistance of lithium secondary batteries including the positive electrode active materials according to Examples 1 to 5 and Comparative Example 1 were evaluated.

The coin cells according to the Examples and Comparative Example were initially charged under constant current (about 0.2 coulomb (C)) and constant voltage (about 4.25 V, about 0.05 C cut-off) conditions, paused for about 10 minutes, and then discharged under constant current (about 0.2 C) conditions until about 3.0 V to perform initial charge and discharge. After that, the charge and discharge was repeated 50 times at about 1 C/1 C. The capacity retention was calculated as the ratio of the discharge capacity at each cycle (25th cycle and 50th cycle) to the initial discharge capacity.

The DC resistance (DC-IR=△V/△I) was calculated from the ratio of an average voltage change (△V) and an average current change (△I) during constant current discharge, and the average values were expressed as the result values. The difference between the DC resistance in the first cycle and the DC resistance in the 50th cycle was expressed as the resistance change.

The results are shown in Table 3 with Examples 1 to 5 shown as EX 1 to EX 5 and Comparative Example 1 shown as CE 1.

**Table 3**

| Divisio n | Charge capacity (mAh/g) | Discharge capacity (mAh/g) | Effici ency (%) | Capacity retention (%, 25 eye) | Capacity retention (%, 50 eye) | DC-IP (Ω, 1 eye) | DC-IR (Ω, 50 eye) | DC-IP change amount (%) |
|---|---|---|---|---|---|---|---|---|
| EX 1 | 247.4 | 219.7 | 88.8 | 98.0 | 96.3 | 7.5 | 10.1 | 34.7 |
| EX 2 | 246.8 | 210.6 | 85.3 | 98.2 | 96.6 | 7.3 | 11.4 | 56.2 |
| EX 3 | 246.5 | 212.4 | 86.2 | 98.4 | 96.6 | 7.4 | 11.1 | 50.0 |
| EX 4 | 247.5 | 217.6 | 87.9 | 98.0 | 96.5 | 7.5 | 10.1 | 34.7 |
| EX 5 | 248.5 | 219.7 | 88.4 | 98.1 | 96.2 | 7.5 | 10.1 | 34.7 |
| CE 1 | 247.8 | 219.7 | 88.6 | 97.7 | 95.6 | 7.0 | 11.3 | 61.4 |

Referring to Table 3, it was confirmed that lithium secondary batteries including the positive electrode active materials according to Examples 1 to 5 had excellent or suitable capacity retention and small resistance change according to repeated charge and discharge.

A positive electrode active material according to one or more embodiments of disclosure, and both a positive electrode and a lithium secondary battery including the same, have high capacity, long lifespan, and low resistance change according to repeated charge and discharge.

A battery manufacturing device, a management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

Although one or more embodiments of the present disclosure have been described, it is understood that the present disclosure should not be limited to these embodiments but one or more suitable changes and modifications can be made by one ordinary skilled in the art within the scope of the appended claims, and equivalents thereof. Therefore, the aforementioned examples should be understood to be exemplarily but not limiting this disclosure in any way.

## Claims

1. A positive electrode active material comprising:
a lithium nickel-based composite oxide comprising nickel (Ni), cobalt (Co) and aluminium (Al),
the positive electrode active material comprising: a first region; and a second region,
wherein the second region is around the first region and has a thickness of about 1 micrometres (µm) in a direction from an outermost surface of the positive electrode active material to a centre of the positive electrode active material, and
an amount ratio of nickel to aluminium (N_{Ni}/N_{Al}) of the second region is about 5 to about 45.

2. The positive electrode active material as claimed in claim 1, wherein an amount ratio of cobalt to aluminium (N_{Co}/N_{Al}) of the second region is about 0.1 to about 10.

3. The positive electrode active material as claimed in claim 1 or claim 2, wherein an amount ratio of nickel to aluminium (N_{Ni}/N_{Al}) of the first region is greater than the amount ratio of nickel to aluminium (N_{Ni}/N_{Al}) of the second region.

4. The positive electrode active material as claimed in any preceding claim, wherein the amount ratio of nickel to aluminium (N_{Ni}/N_{Al}) of the first region is at least about 46.

5. The positive electrode active material as claimed in any preceding claim, wherein the positive electrode active material comprises:
a core comprising the lithium nickel-based composite oxide; and
a coating layer on the core, and comprising cobalt and aluminium.

6. The positive electrode active material as claimed in claim 5, wherein the core is a secondary particle, the secondary particle being an agglomeration of primary particles.

7. The positive electrode active material as claimed in claim 5 or claim 6, wherein the core comprises cobalt, and
a cobalt amount of the core is less than a cobalt amount of the coating layer.

8. The positive electrode active material as claimed in any of claims 5 to 7, wherein a molar ratio of aluminium to cobalt (C_{Al}/C_{Co}) of the coating layer is about 0.1 to about 4.

9. The positive electrode active material as claimed in any of claims 5 to 8, wherein the coating layer comprises:
a first coating layer on the core; and
a second coating layer on the first coating layer, and
an aluminium amount of the second coating layer is greater than an aluminium content of the first coating layer.

10. A positive electrode comprising a positive electrode current collector and a positive electrode active material layer, wherein the positive electrode active material layer comprises the positive electrode active material as claimed in any of claims 1 to 9.

11. The positive electrode as claimed in claim 10, wherein an amount ratio of cobalt to aluminium (N_{Co}/N_{Al}) of the second region is about 0.1 to about 10.

12. The positive electrode as claimed in claim 10 or claim 11, wherein an amount ratio of nickel to aluminium (N_{Ni}/N_{Al}) of the first region is greater than an amount ratio of nickel to aluminium (N_{Ni}/N_{Al}) of the second region.

13. The positive electrode as claimed in any one of claims 10 to 12, wherein an amount ratio of nickel to aluminium (N_{Ni}/N_{Al}) of the first region is at least about 46.

14. The positive electrode as claimed in any one of claims 10 to 13, wherein the positive electrode active material comprises:
a core comprising the lithium nickel-based composite oxide; and
a coating layer on the core, and comprising cobalt and aluminium.

15. A battery,
wherein the battery comprises the positive electrode active material as claimed in any one of claims 1 to 9, and
wherein the battery is a lithium secondary battery.
